# EUROPEAN PATENT APPLICATION

(11) **EP 1 486 360 A2**
(43) Date of publication of application: **15.12.2004**
(21) Application number: 04076719.6
(22) Date of filing: 14.06.2004
(51) Int. Cl.: B60G 21/06

(54) **Wave pulse distributor for controlling pressurized fluid suspension devices**

(30) Priority: 13.06.2003 AR 0302128
(71) Applicant: Horacio Bonafede, Fernando, Ciudad Autonoma de Buenos Aires (AR)
(72) Inventor: Horacio Bonafede, Fernando, Ciudad Autonoma de Buenos Aires (AR)
(74) Representative: Carvajal y Urquijo, Isabel

(57) **Abstract**

A wave pulse distributor (13,15) for controlling pressurized fluid suspension systems having the lower ends of the plurality of kinematic chains of plates not elastically supported by the primary suspension system, as sensors of the distributor and, the respective opposite ends of said plurality of kinematic chains of plates, the bases and covers of the springs (9) of the primary suspension system are arranged as the plurality of drive elements of certain gradual or sudden positive or negative volumetric variations on the fluid masses housed in said springs (9), with known wave pulse generators (13,15) which are arranged as propagation routes to the pressurized fluid masses housed: a) in the internal volumes of said pressurized fluid springs (9), b) in one or more of the necessary hollow and air-tight parts belonging to the wave pulse distributor (13,15), c) in the respective and necessary connection means comprised between said springs and said necessary hollow and air-tight parts belonging to the distributor.

## Description

The present invention refers to a wave pulse distributor for controlling pressurized fluid suspension devices.

### Prior Art

In World War II (1939), the development of war rockets and cannons drove the electronics industry to improve their trajectories which, combined with the invention of the transistor when the war ended and its application to computers or distributors, facilitated the launch of the first earth satellite into orbit in 1958 and its use in innumerable applications. Until the 1980s, suspensions in all vehicles produced preferably used the known spring/shock absorber assembly of predetermined elastic and damping constants, which implied a difficult solution of compromise between a comfortable running and the safety thereof for sustained growth end velocities. To respond to the increase of velocity and to suitably adjust the predetermined constants, in the 1950s metal springs were replaced with pneumatic springs at a constant level under variable load in buses, and some attempts were made in high-priced private cars, the latter disappearing from the market a short time thereafter. In the 1990s, according to the already mentioned technology, electronic sensors were installed in automobiles to detect the instant physical variables: acceleration of the mass suspended at different points and centrifuge, the angular velocity of the wheels, the distance to the terrain, etc., which are processed in an electronic control module - distributor- for controlling certain electrovalves strategically arranged in the circulation of the fluids contained in the shock absorbers; or in systems: a) of pressurized fluid suspension: pneumatic, oleo pneumatic, mixed metal/pneumatic, oleopneumatic systems, b) of hydraulic brakes, etc., improving the conditions of running and safety in the high-priced vehicle sector, passenger and cargo transport sector, the competition sector, etc. To date, the rest of the market has limited improvements in the elastic features of the prevailing metal springs and of the durability of the spring-shock absorber assembly, the conditions of use, safety and maintenance costs slightly improving.

The wave pulse distributor for controlling pressurized fluid suspension devices object of the present patent application is generally related to the known springs of the pneumatic, oleopneumatic, metallic/pneumatic-oleopneumatic suspensions, etc., in order to innovate their known predetermined elastic and damping constants prevailing on the market, introducing therein simple and efficient energized fluid devices that will be detailed in the embodiment examples. The distributor adapts the values of said predetermined constants to be able to roll on greater differences of level of the terrain, perfectly stabilizing the resulting turning torques propelled by external or inertial forces, generated by the sudden or gradual variations of: a) the topography of the terrain, b) the velocity in starts and stops, c) the direction of the automobile, d) situations due to encounters with large freight vehicles, a tire blow-out, due to movements of the supports in stationary masses, etc.; easily processing sustained growth end velocities of the automobiles due to technological improvements in the engines, bodies, suspension, tires, etc.; or in stationary masses subjected to inertial forces or displacements of the terrain.

The installation of the most elementary wave pulse distributor in a known mobile or stationary pressurized fluid spring suspension system consists, according to that set forth in claim one, of the operation of combining together the fluid masses housed in two pair of springs belonging to a motorcycle suspension device, placing between them the necessary hollow and air-tight part belonging to the distributor, materialized at least in a conduit of a certain and determined diameter, which transforms the individual functioning of said original springs into a new system integrated by long columns of energized fluid that will be explained in the embodiment examples of the present specification. The elastic and damping properties of the fluid masses housed in the long columns mentioned allows, by means of the operation of the wave pulse distributor, detecting, transferring at a high velocity and equally distributing to the remaining supports the impact or variation of the amount of movement acting on a wheel or support of a suspension system, such that in practice the elastically suspended mass of the automobile moves up or down close to the vertical direction with an acceleration having a modulus which will be at least half that of its original springs, with the capability to carry out maximum, highly stable decelerations exceeding those currently existing on the automobile market, free of noticeable transfers of weight from the rear to the front axle, maintaining the adherent weights synchronous among all the supports of the automobile, even when rolling on arbitrary differences of level of the terrain, as will be seen in the present specification. Likewise, in gradual volumetric operations, such as the pressurization of the suspension system or in starts, braking, direction changes at a high velocity, the distributor efficiently administers the necessary fluids in evolutions without remarkable alterations in the molecular kinetics of the fluid, according to the requirements of the case at hand, which will be detailed in the embodiment examples.

In the drawings of the embodiment examples, the parts which are wholly known are drawn with thin lines, and the novel parts are drawn with thick lines, additionally identifying the different parts by means of numbers, understanding that equal numbers in different drawings indicate equal or equivalent elements.

### Example 1

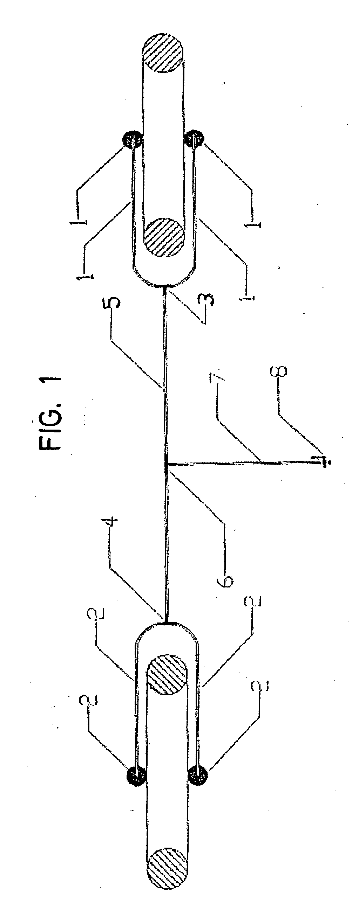

This example involves connecting a wave pulse distributor to a load variable level suspension of a motorcycle with known rolling lobule air chamber-type front and rear energized fluid pairs of springs, with elastic features similar to the metal coil springs in motorcycles of the same class on the market. See Figure 1.

To connect the distributor, the front and rear pairs of springs (1, 2) and their respective conduits are connected with respective T-joints (3, 4), whereas their bypasses are connected to the ends of a conduit (5) of a certain and determined diameter, materializing the hollow and air-tight part (5) of the distributor.

Furthermore, another T-joint (6) is inserted in the conduit (5), in the bypass of which it is connected with the conduit (7) provided with a valve closure means (8) for the inlet or outlet of the pressurized fluid mass, all this being consistent with that disclosed in claims 1, 2, 3 and 5.

### Pressurization of the distributor and of the suspension system

The device is inflated with an external compressor connected to said valve closure means (8) until the motorcycle reaches its predetermined, original load-free static level. It is worth pointing out that during pressurization, part of the internal energy of the loaded fluid is transformed in external work, measured by the increase of the gravitational potential energy of the suspended mass, in order to reach the static level and to constitute the long column of fluid mass housed in the pairs of springs (1, 2) and in their respective connection means in said hollow and air-tight part (5) belonging to the distributor, thus materializing the innovated elastic constant of the suspension system, whereby the vehicle is prepared for running.

### Functioning

Now, the motorcycle is driven on a rural road at cruising speed, the front wheel, or topographical sensor of the terrain, entering into an elevation of A cm, the magnitude of which implies a certain and determined increase of its amount of vertical movement belonging to the kinematic chain of front plates not elastically suspended by the springs of the motorcycle. The opposite end of said chain of plates not suspended by said primary springs comprises the pair of pistons belonging to the front springs (1), or impellers of simultaneous and determined sudden volumetric variations, generating known positive longitudinal wave pulses in the piston/energized fluid mass interfaces, which causes a subsequent and known train of longitudinal compressive waves which are propagated through the long column of pressurized fluid housed, according to that set forth, in the front pair of springs connected to the pair of conduits (1) connected to the T-joint (3), thus constituting the respective and necessary connection means comprised between the springs and said certain central portion of the conduit (5), or necessary hollow and air-tight part belonging to the distributor, the opposite end of which connects to the rear receiver springs (2) by means of the T-joint (4) and respective connection conduits.

The energy transported by said wave pulse, according to rules known in the art, is distributed by the distributor in a ratio similar to the instant magnitudes of the respective bearing loads belonging to the springs (1, 2). Therefore, the suspended mass increases its potential energy, according to said wave energy distribution, by means of an upward movement in the approximately vertical direction.

For ground level decreases or dips in the terrain, the wave pulses will be expansive, and all that stated in the previous paragraph is valid, but with an opposite sign corresponding to the suspended mass moving downwards in the approximately vertical direction. For upward or downward movements, the acceleration of the front or rear suspended mass will be approximately less than 20% G in relation to that recorded for similar motorcycles on the market which, with metal coil springs, show an acceleration rising to 40% G.

The motorcycle carries out an emergency braking at cruising speed. When the pilot actuates both brakes, the system of adherent forces of the terrain opposite to its trajectory generate a known force couple or turning torque which tends to vigorously rotate the suspended mass of the motorcycle with regard to its center of gravity, such that the covers of the springs or front impellers (1) and rear impellers (2) fixed to the suspended mass strike abruptly, generating in their covers/compressed air interfaces known and respective compression and expansion wave pulses on the fluid masses of the springs (1, 2), synchronously generating respective compression and expansion wave pulses which will tend to be of a similar magnitude according to the skill and efficiency of the pilot in the braking operation. The wave trains generated by said pulses are propagated at a velocity of 300 m/second in opposite directions along the long column of fluid housed in respective pairs of springs (1, 2), and their output conduits or connection conduits with the hollow and air-tight part belonging to the distributor, or conduit (5), which, according to known rules of the art, interfere with one another, i.e. they are algebraically subtracted from one another, according to the magnitudes of their respective moduli. The result generated in said subtraction, depending on the skill of the pilot, will generally be of little value and, accordingly, it maintains the magnitudes of the bearing capacities of the springs (1, 2) relatively unchanged, therefore the suspended mass of the motorcycle follows a stable deceleration with scarce tendency to noticeable transfers of adherent weight from the rear to the front axle. The suspended mass shows a vigorous deceleration in a practically horizontal and stable trajectory, the modulus of which remarkably exceeds that of conventional motorcycles.

### Example 2

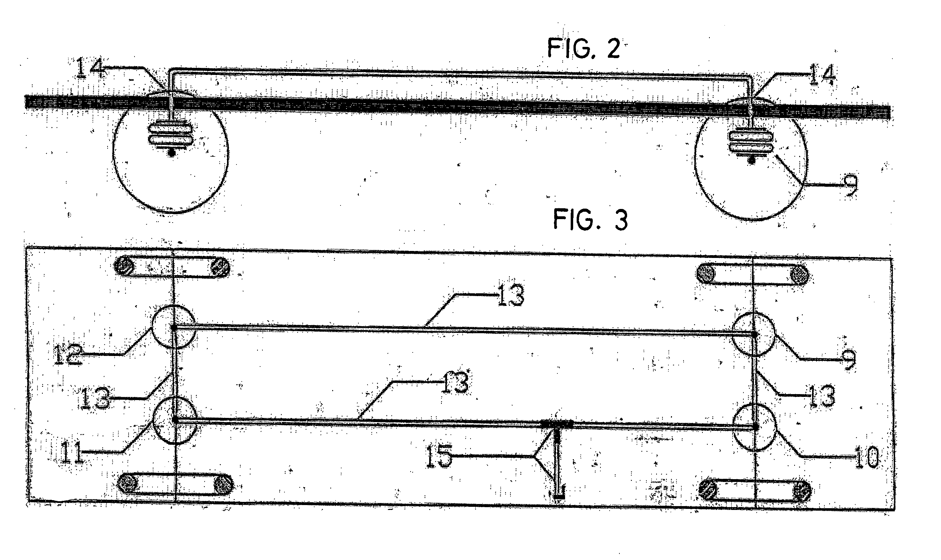

According to Figures 2 and 3, the metal coil springs of predetermined elastic and damping constants in a known four-wheel all-terrain vehicle are replaced with known ball-type pneumatic springs of individual elastic features similar to said original springs of the vehicle, in order to connect a wave pulse distributor such as the one claimed in claims 1, 2, 4 and 5 of this specification.

### Replacement of the springs

The original metal springs are removed in order to install in replacement thereof known ball-type pneumatic springs (9, 10, 11, 12) of similar features, which are connected to the wave pulse distributor, shown as can be observed in Figures 2 and 3. According to claims 3, 4 and 5, a closed branch conduit (13) with respective vertical bypasses (14) is arranged, which bypasses are connected to the respective fluid springs (9, 10, 11, 12) of the suspension device, and this connection ends by inserting the T-joint and its additional bypass (15), provided with a valve closure means, in the conduit (13) for the inlet and outlet of energized fluid mass.

### Functioning

The suspension device is pressurized with the technique of the previous example, and at cruising speed, the front wheel of the automobile, or topographical sensor (9), impacts on the arbitrary topography of the terrain. The wheel and its remaining non-suspended mass, when traveling, operate as a terrain sensor belonging to the distributor which computes certain variations in its amount of vertical movement. The opposite end of the kinematic chain of non-suspended mass, the base of the pneumatic spring (9, in vertical view) or impeller, alters proportionally and in a localized area the volume of fluid situated in the interface with the base of the spring, generating a known wave or wave pulse train which is propagated through the column of fluid mass contained in said spring to continue through said vertical bypass (14), and the column of fluid housed in the closed branch conduit (13), or operative core of the distributor, which distributes the wave train, by means of the remaining bypasses (14), to the springs (10, 11, 12) in a manner proportional to the static loads of each one of the supports, according to rules known in the art, which in practice generates in the novel features of said springs, a system of forces proportional to their respective energized effective surfaces, with a slight loss in their bearing capacity, the resultant of which technically will pass near the center of gravity of the suspended mass.

As a result, for the arbitrary topography of the terrain in question, the suspended mass of the vehicle will carry out moderate upward and downward, close to vertical, movements, or translation movement, with an acceleration similar to 10% G, approximately being 25% of the original acceleration of the automobile, the movement of which prior to its transformation is rotation/translation, and its modulus is in the range of 40/45 G.

The automobile enters into a slightly curved trajectory. The change of direction produces a centrifugal turning torque, progressively increasing until reaching a determined moderate value with no noticeable pulse, during which the springs (9, 12) of the outer side of the curve decrease their height and volume and increase their known energized effective surface factor. Furthermore, due to said decrease of volumes, fluid is evacuated to the chamber of the distributor, i.e. to the closed branch conduit (13), causing a fluid mass to enter into the springs (10, 11) of the inner side of the curve, and hence increasing their heights, their reactive effect being added to the component of the centrifugal torque due to producing a certain decrease of the energized surface and the resulting bearing capacity, whereas the total internal energy of the fluid mass of the system remains significantly unchanged, all this generating a reactive torque balancing said slight centrifugal torque in question. Similar circumstances are repeated in the longitudinal transfers of weights between axles during starts and gentle decelerations, i.e. those which do not produce wave pulses, according to that observed.

To conclude, the automobile carries out an emergency braking. The suspended mass reacts due to inertia in a manner contrary to the system of external forces acting on the rubber/terrain interface, or sensors of said external forces, which conforms the known couple or turning torque, which tends to rotate said suspended mass with regard to its center of gravity, the covers of the rear pneumatic springs (11, 12) and front pneumatic springs (9, 10) vigorously striking on their respective fluid masses, therein generating respective and known expansive and compressive wave pulses, the moments of which, with regard to the center of gravity of the suspended mass, are of equal magnitude and opposite direction of propagation through the longitudinal conduits (13). Bearing in mind that the wave pulses -expansive and compressive- are, in terms of transported kinetic energy, of opposite signs, according to known rules of the art, and that their propagation through the long columns of energized fluid of the distributor in respective opposite directions, will produce the known phenomenon of interference, canceling out their respective transported kinetic energies, as a result of which it is possible to verify that the bearing loads of said springs on both axles maintain in practice the same values as those prior to the deceleration, as a result of which the adherent weights will be similar to the static weights, therefore, the known rotation of the suspended mass, its resulting transfer of weight from the rear axle to the front axle, and the known destabilization of the trajectory of the automobile, which decelerates with a novel module much better than those usually used in the automobile market, practically disappear, the suspended mass maintaining a single trajectory, technically horizontal, completely stable, for any arbitrary topography of the terrain, or condition of its grade, whether it is dry, moist, wet or covered with hail, in practice decreasing the usual risks of skidding in emergency braking, which affects the automotive fleet available on the market today.

### Example 3

A smart wave pulse distributor is connected to the known pneumatic suspension of an agricultural fumigator, with three support points and constant level under variable load, constituted of four rolling lobe air chamber-type pneumatic springs energized by three level valves, and four conventional shock absorbers of predetermined features.

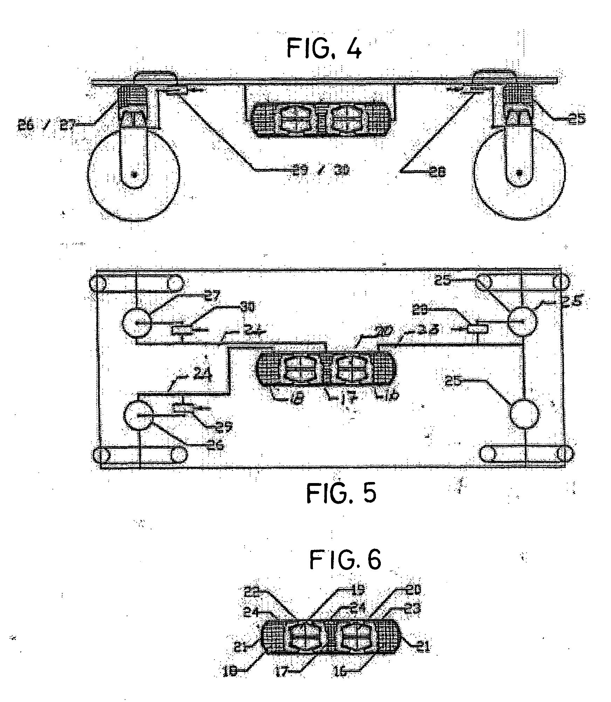

According to Figures 4, 5 and 6, the distributor is characterized by comprising three hollow and air-tight parts or chambers (16, 17, 18) of flexible walls, similar to rolling lobe-type air springs, belonging to the suspension of the sprayer. Said chambers are linked in tandem, inserting in the intermediate openings of the central chamber (17) known pins (19, 20) of respective double frustoconical bases, solidly joined to one another at their respective larger bases, while in the opposite pins the openings of the chambers (16, 18) are inserted, in which remaining openings situated on the ends of the distributor, the pins of respective semi-elliptical circular caps (21) are inserted, linked to one another by their cylindrical flaps, overlapped by a necessary and resistant cylindrical casing (22), provided with sufficient fixing means, in which the side surfaces of said chambers (16, 17, 18) housed inside are supported, provided with respective straight connectors and their conduits (23, 24, right and left), which connect their internal volumes with the internal volumes of the pair of front air springs (25) and rear air springs (26, 27), pressurized by means of the constant level valves and connection conduits (28, 29, 30). According to that shown in Figure 4, correlated and indispensable drain conduits are inserted in required diametrical and vertical opposition of said conduits (23, 24, right and left), since the device is a practically enclosed unit, to periodically remove the known condensation liquid which can possibly be housed inside the chambers (16, 17, 18) of the distributor.

The hollow and air tight parts or chambers (16, 17, 18) form a singular kinematic chain of plates, linked to one another by the movable rolling lobes in opposition, constituted of the double intermediate bases (19, 20) working as pistons in the corresponding openings and rolling lobes of the hollow and air-tight parts (16, 17, 18), the mobility of which depends on the variation of the pressures prevailing in said hollow and air-tight parts, the merit of this design being the removal of the axle and the retainers in this design, as well as their wear due to mechanical friction during use, with regard to a distributor to be used in Example 5, provided with a central axle.

In practice, the suspension springs (25, 26, 27) have been integrated as appendages or attached elements of the wave pulse distributor for controlling the pressurized fluid suspension to notably innovate its predetermined constants, as a result of which the automobile is ready to be placed in functioning.

### Pressurization of the Device

The suspended mass of the sprayer is supported on the rebound blocks of the non-loaded suspension, and the compressor, driven by the motor -not shown in the figures- insufflates compressed air through the known level valves (28, 29, 30), whose increasing amount of movement or internal energy of the fluid, when balancing the spring with a smaller specific load, for this case, the pair of front springs (25), elevate their bearing load until said front support reaches its provided elastic height, the moment in which the front level valve (28) cuts off the inlet of fluid to the front support. In the remaining supports, rear springs (26, 27) and respective chambers (17, 18) of the distributor, the inlet of fluid continues, and the subsequent increase of its internal energy occurs, as a result of which the sliding intermediate bases (19, 20) of the chambers of the distributor, in static equilibrium with regard to one another from the commencement of the energization, are moved according to the incoming fluid, increasing their corresponding volumes, while on one hand, their known energized effective surfaces decrease, and on the other hand, the volume of the chamber (16) of the distributor decreases and reacts by increasing its effective energized surface in consecutive conditions of dynamic equilibrium, while it transfers to the pair of front springs (25) a certain part of its fluid, which elevates the support and initiates a known venting process in its constant level valve (28) due to the transitory surplus of fluid mass given its smaller load condition. The described circumstances are successively repeated in the remaining supports when the level valve (30), according to the increasing order of the gravitating or specific loads, cuts off the inlet of fluid to its corresponding spring (27) when its portion of suspended mass reaches the provided static level, initiating the second fluid discharge or venting cycle, which continues until the spring (26) reaches its constant level, closing the level valve (29) and suspending the inlet of fluid thereto, and said venting operations in said supports of the springs (25, 27) cease as well.

According to that observed, the distributor has loaded in a controlled manner the fluid mass necessary for carrying out all the operations of the system and sustaining the supports of the suspended mass at a constant level. The same process is repeated for any other possible load condition allowed, or with a surplus, as a result of which the vehicle is ready to be placed in running.

### Functioning

The sprayer carries out fumigation of a field when the left front wheel, or lower end of the kinematic chain of plates only suspended elastically by its tire (25), hits a deep dip of A cm. Simultaneously, the corresponding upper end of said chain, the impeller or piston of the left front spring (25), transforms the downward topographical signal into a known sudden volumetric expansion, or wave pulse, of the fluid belonging to a certain portion of the fluid housed in said spring (25), which is propagated through the remaining fluid and continues through the long column of fluid housed in the conduits (23), connected with the corresponding chamber (16) of the distributor, to the interface with its intermediate frustoconical bases (20), which transmits to the fluids of the remaining chambers (17, 18) of the distributor the expansive wave pulse resulting from the support entering the dip of A cm, in direct proportion to the magnitude of the fluid housed in each one of the supports belonging to the springs (10, right, 11, 12) of the sprayer, according to known rules of the art. The suspended mass moves downwards close to the vertical direction with an acceleration of less than 0.1 G, i.e. lower than one-fourth that of the acceleration corresponding to the original suspension system of the sprayer, without causing noticeable rotations, which implies a significant improvement of the elastic features of the springs coupled to the distributor.

The following recovery of the wheel to the previous level carries out similar wave pulses with a changed sign, or compression, which, added to the rebound of the tire, is distributed and transferred synchronously to the remaining supports, as a result of which the suspension system significantly decreases its frequency with regard to the previous isolated effect on a single support with individual springs, as a result of which the suspended mass moves upwards close to the vertical direction until its static level is similar to the preceding one. The sprayer running on a route at 55 km/h carries out an emergency braking. The external forces of the terrain generated by the deceleration act on the sensor or wheel/terrain interfaces in opposition to the inertial reaction of the suspended and non-suspended mass, having a line of action which passes through its center of gravity. The subsequent inertial turning torque exercises a sudden tendency for the known transfer of weight from the springs (26, 27) of the rear axle to the pair of front springs (25) to occur.

The upper covers of said springs, solidly fixed to the suspended mass, vigorously strike on their respective interfaces with the fluid masses, generating respective wave pulses, the reactive moments of which, with regard to the center of gravity of the suspended mass, are of equal magnitude, opposite sign -expansion-compression- and opposite propagation directions through the rear conduits (24, right and left) and the front conduit (23), according to that observed, directly linked to one another by means of the dynamics of the chambers (16, 17, 18) of the distributor, which are provided with the necessary and sufficient conditions for their distributive propagation, interference, and subsequent reciprocal cancellation of their effects, according to known rules in the art, whereby technically, the pneumatic suspension device of the sprayer, in practice, conserves the system of pre-existing forces upon the deceleration. In fact, the sprayer efficiently brakes with adherent weights proportional to the static loads, even when the vehicle is rolling on an arbitrary topography of the terrain, conserving a technically stationary regimen in which the instant adherent weights are maintained approximately proportional to the static loads and synchronous among all the supports, as a result of which its trajectory is highly stable with no visible effects of transfer of weight from the rear to the front axle.

Due to the circumstances set forth and the low natural frequency of the present suspension system, the adherence on wet pavements with its known coefficients stands out even on surfaces that are smooth or which are covered with rain, hail, etc.

Furthermore, since the sprayer deals with the different heights of the crop, just as other agricultural machinery, a certain hazardous compacting effect is produced thereon since a certain capacity of the water reserve of the terrain decreases in the traversed areas, subsequently affecting the crop yield, which effect is greatly reduced by means of the proposed distributor, by means of a reduction to at least 10% G of the vertical acceleration of the suspended mass as well as the oscillation frequency of the non-suspended masses with regard to the original springs, i.e. prior to their installation, in a range similar to 40% G.

### Example 4

An oleopneumatic smart wave pulse distributor is installed in a new oleopneumatic suspension device, determined statically and at a constant level under variable load.

### Prior Art

The oleopneumatic suspensions known in the automotive market are provided with a central oleopneumatic support point in each wheel gear, front and rear, i.e. a constant level valve, situated on their centers, respectively pressurizes respective pairs of compact spring/shock absorber assemblies of predetermined elastic and damping constants. They are also provided with respective front and rear stabilizing torsion bars intended for balancing the effects of the transverse force couples caused by the arbitrary variations of the terrain, due to inertial changes of direction or velocity, gravitating asymmetric loads on the suspended mass of the automobile, effects of the wind, etc.

### Description of the New Suspension Device

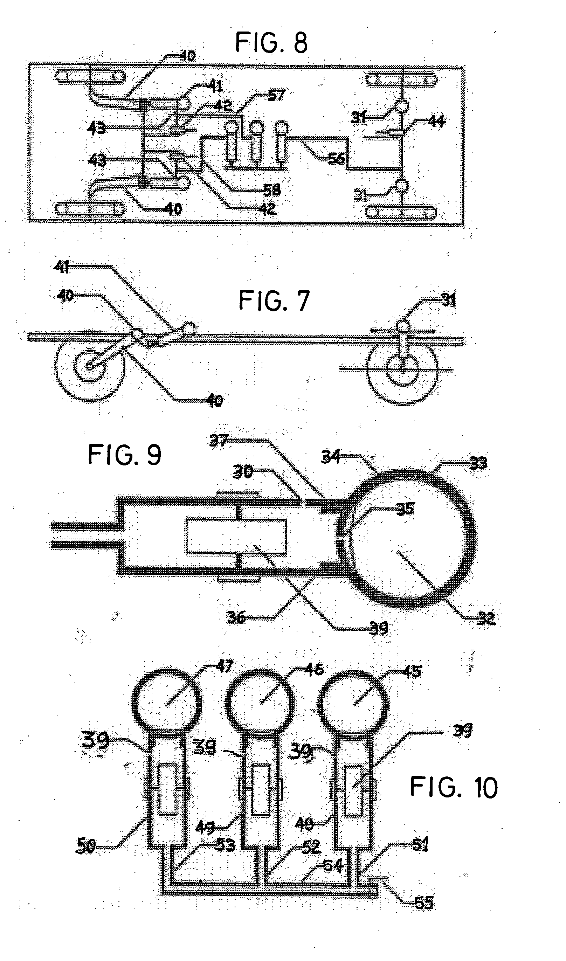

According to Figures 7, 8, 9 and 10, the new suspension device is similar to that disclosed in the prior art and differs in that it lacks the valve plates of the original shock absorber, i.e. the predetermined damping constant, inserted in its compact oleopneumatic springs, and it lacks said sway bars on both wheel gears.

The front wheel gear is provided with the known system of deformable parallelograms with two unequal transverse arms hinged to the suspended mass, actuated by respective oleopneumatic springs (31, left/right, Figures 7 and 8), consisting of comprising respective nitrogen gas ampoules (32, Figure 9) as compressible fluid stored in respective air-tight spheres (33) of elastic and flexible walls supported in other resistant steel spheres (34) which are provided with a small hole (35) circumscribed on its outer sides by respective fixed fixing means (36) with a screw link in which respective tubular bodies (37) are screwed, which are provided on their side surface with a hole (38) for the inlet and outlet of the pressurized incompressible fluid, which sustains and actuates the internal portions of its corresponding rods (39, Figure 9), the outer portions of which hinge and actuate the lower grids of said deformable parallelograms of the suspension, as a result of which they will act contemporaneously as converters of the variations of the amounts of movement generated during the rolling of the tires, or terrain topography sensors of the external or inertial forces, in known volumetric evolutions of the fluids contained therein, whereas the opposite ends of said springs, i.e. the steel spheres (34, Figure 9), are supported in a reinforcement of the suspended mass, thus configuring the elastic mechanism of the front suspension of the automobile. The rear wheel gear consists of comprising a known cross member, on the ends of which respective longitudinal drag arms and their wheels (40) are hinged, furthermore provided with respective short arms adjacent to the hinge where respective rods of the pair of rear oleopneumatic springs (41 right/left) act, which support their opposite ends in respective reinforcements of the suspended mass, being pressurized on one hand by the constant level valves (42, right and left) and the pair of its respective outlet conduits (43, right and left), and on the other hand, the front constant level valve and its respective pair of outlet conduits (44) pressurize said front springs (31), whereby the automobile is prepared for running.

### Description of the Distributor

According to Figure 10, the distributor is characterized by comprising three hollow and air-tight parts, or oleopneumatic chambers (45, 46, 47), equal to said oleopneumatic springs of this suspension, to which pieces necessary additional tubular bodies (48, 49, 50, Figure 10) are coupled, by means of threaded unions, to house the corresponding outer portions of the rods (39, Figures 9 and 10), respective retainers circumscribing their inlet holes. During the assembly of the device of the distributor, the length of the rods (39, Figure 9) must necessarily be distributed by halves inside each one of the respective tubular bodies of the chambers (45, 46, 47) and of said additional tubular bodies (48, 49, 50, Figure 10). Then, the remaining ends of said additional tubular bodies are linked, by means of respective and known double threaded unions, with the ends of the bypasses (51, 52, 53) of a necessary sealed collector conduit (54) of the distributor provided with an indispensable valve closure means (55).

The distributor shown in Figure 10 is solidly linked to the suspended mass, as can be seen in Figure 8, and the oil inlet and outlet hole of its chamber (45, Figure 8) is connected, by means of the conduits (56), with a conduit of the pair of conduits (44) interconnecting the pair of front springs (31), and with the constant level valve (44) in turn connected to said pressure oil accumulator not shown in the figure.

The oil inlet and outlet holes of the remaining chambers (46, 47) of the distributor are connected to respective conduits (57, 58), the opposite ends of which are respectively connected with the pair of conduits (43, left and right), joining the springs (41, left and right) with their respective rear level valves (42, left and right), which in turn are connected to said pressure oil accumulator.

### Provision of Fluids

This is carried out in two steps.

The first step consists of loading, once and definitively, the compressible fluid in the nitrogen ampoules at the corresponding manufacturing pressure: a) in said springs of the suspension, and b) in said chambers of the distributor. The second-step-consists of respective oil loads: a) in the reserve tank of the oleopneumatic suspension system - not shown in the figures-, and its subsequent purging, and b) in the collector conduit (54, Figures 8 and 10), operating its valve closure means (55), their volume is completely loaded with oil and they are hermetically closed, whereby the suspension device disclosed is prepared for running.

### Pressurization of the Suspension Device, or Loading of the System

The suspended mass is now supported on the rebound blocks of the suspension while the motor actuates the pump which pressurizes the oily fluid and sends it to the oil accumulator, which, by means of conduits situated in the suspended mass and not shown in the Figures (8), feeds the constant level valves (42, rear right and left, 44, front), and their respective output conduits (43, right and left and 44), which pressurize: a) the respective rear springs (41, right and left, 31, front), b) by means of (56, 57, 58) to its corresponding chambers (45, 46, 47) belonging to the distributor, until the rear spring (41 left) balances the spring of the support with the lower specific load condition, which will elevate the magnitude of its bearing load to the provided static level, where its constant level valve (42, left) closes off the inlet of fluid to said rear spring (41, left) and its chamber (46) of the distributor. On the other hand, the remaining front level valve (44) and rear level valve (42, right) continue supplying fluid to the springs (pair 31 front, rear, 41, right) of the supports with a greater specific load and to the chambers (45, 47, right) of the distributor, as a result of which the latter chambers move their rods (39, Figures 9 and 10) which in turn drive the columns of oily mass housed inside the additional tubular bodies (48, 50, Figure 10), and the fluid contained in the conduits of the collector (54) belonging to the distributor, which will move, due to its higher internal energy, the part of the rod (39) housed in the additional tubular body (49) belonging to the chamber (46) of the distributor, and hence, the opposite end of said rod will drive the fluid housed in its oleopneumatic chamber (46) connected by means of the conduit (57) with the left rear spring (41, Figure 8), already situated in its constant level position, as a result of which it will remarkably elevate the bearing suspended mass, and its respective level valve (42) will discharge or send oil to said reserve tank of the oleopneumatic system, as needed. Meanwhile, in the springs (31 front, 41 right), the inlet of oily mass and said oil discharge process through the level valve (42, left) corresponding to the spring (41, left) continue, which will be repeated in the spring (41, right), even when it reaches its static level and initiates the following oil discharge process through its valve (42, right), until the pair of springs (31) elevates the front suspended mass to its corresponding static constant level, at which time the front level valve (44) closes off the supply of oil to the system and, hence, both rear valves (41) conclude their said discharges to the oil reserve tank, the automobile being prepared for running.

### Functioning during Running

The car is traveling at cruising speed on a dirt road of an irregular topography, and it enters into a tight, right-handed curve. The driver decreases the velocity as a precaution against: a) the corresponding centrifugal inertial torque exceeding the tire/terrain adherence forces, or b) the overturning couple strengthening its potential overturn capacity.

The component forces of the centrifugal inertial torque acting transversally on the suspended mass and on the tire/terrain interfaces cause the compression of the oleopneumatic springs (31, 41, left) situated on the convex side of the curve, whereas the springs (31, 41, right) on the concave or inner side of the curve suddenly tend to expand their fluids, therein generating respective and known wave pulses with moduli of equal magnitude, energetic contents of opposite signs and opposite propagation directions, by means of the long transverse columns of fluids housed: a) in the pair of connection conduits (44) between the pair of rear springs (31, left and right), b) in the rear conduits (43, left and right) connected respectively to the conduits (57, 58) which are connected respectively to the rear springs (41, right and left), with the chambers (46, 47) of the distributor in turn linked to one another by means of a span of said collector conduit (54) of the distributor comprised between said chambers (46, 47), thus conforming a succession of conduits and fluid masses contained therein necessary and sufficient for the propagation of said transverse wave pulses generated by the front and rear components of said centrifugal and inertial torque acting on the automobile. Given that the transverse wave pulses emitted are of equal magnitude, opposite energization - compression/expansion- and opposite propagation direction through the fluid masses housed in the disclosed transverse conduits which propagate them, according to known rules of the art, they give rise to known respective phenomena of interference, and the subsequent reciprocal cancellation of their respective energetic potentials, as a result of which the system of the bearing forces of the suspended mass prior to entering into the curve technically remain in a stationary condition, while the suspended mass of the automobile undergoes the change of direction with a remarkable stability by means of the singular and specific control carried out by the distributor disclosed in the present specification, all of which can be verified by an observer situated inside or outside of the automobile.

Now the automobile undergoes a highly urgent deceleration.

The system of adherent forces on the rubber/terrain interfaces, of direction opposite to its trajectory, generates a longitudinal inertial turning torque which tends to vigorously rotate the suspended mass with regard to its center of gravity, generating respective expansion tendencies in the rods of the rear springs (41), and the subsequent expansion of their contained fluid masses, while they compress the rods of the pair of front springs (31) and their fluid masses, which produces, according to that set forth, respective expansion and compression wave pulses, respectively. Said wave pulses are propagated, according to that observed, through the long columns of oily fluid housed in the conduits comprised between the pair of rear springs (41) and their respective chambers (46, 47) of the distributor, which rods (39) at the same time transmit the fluids housed in the additional tubular bodies (49, 50, Figure 10) to then flow together in conditions of continuity in the propagation of said pulses towards the chamber (45) of the distributor, connected by means of the conduits (56 and 44) with the pair of front springs (31), and vice versa, i.e. in the opposite direction. Therefore, the distributor shown in Figure 10 establishes the mechanics of the interference of said pulses, according to that observed, as a result of which the deceleration is completed under equal conditions as those explained in the previous paragraphs concerning the curved path, i.e. with no noticeable transfers of weight from the rear axle to the front axle, and to which is added said proportional and synchronous distribution of the variations of the instant bearing loads generated by the running of the automobile on the arbitrary topographies of the terrain to all the supports, obtaining as a result systems of bearing forces and adherent weights being instant and synchronous with one another during the deceleration, approximately similar to the static loads, the resultants of which technically coincide with the vertical projection of the center of gravity of the suspended mass, which grants the automobile trajectories free of turning torques or force couples, which tend to rotate the automobile with regard to said vertical, in any terrain topography condition, weather condition, etc., which promotes very stable decelerations superior to those which are usual in the vehicle market, without exception. Bear in mind that in spring suspensions with predetermined features, the systems of bearing forces and adherent weights lack synchronism among the different supports, posing the known instability in emergency braking, substantially limiting the efficiency of the braking and the safety of the automobile on terrains with certain topographical deficiencies.

### Example 5

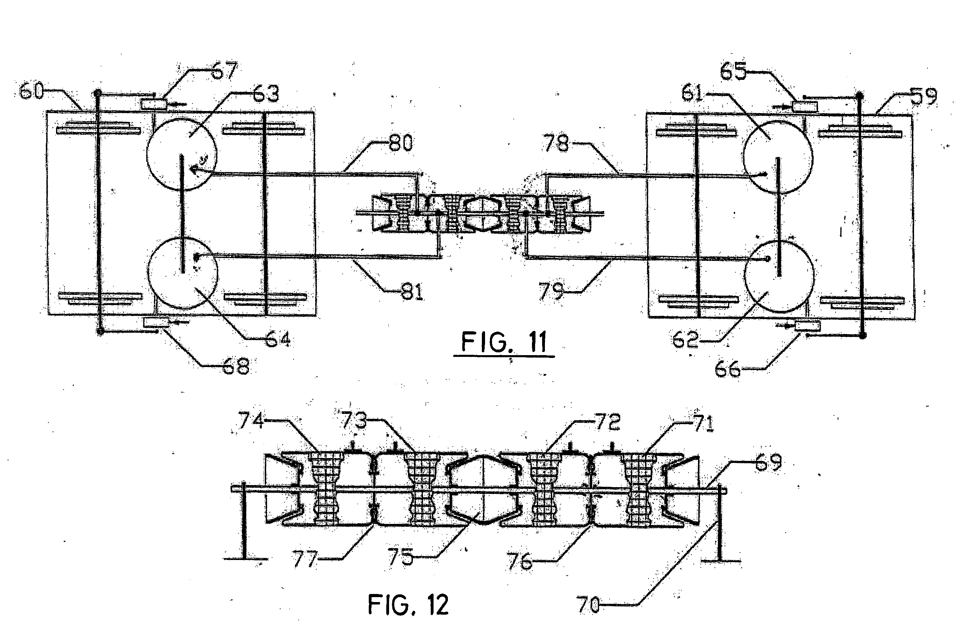

A wave pulse distributor is installed in a known hyperstatic pneumatic suspension at a constant level belonging to a passenger train wagon, assembled on two bogies, each one of a double axle, as according to Figures 11 and 12.

Each bogie (59, 60) of the known hyperstatic pneumatic suspension is provided with two bellows or pneumatic springs (61, 62, 63, 64), energized by respective known leveling devices, and their corresponding conduits (65, 66, 67, 68). The bodies of the leveling devices are fixed to the side frames of each bogie, fed by the compressor, not shown in the figures, and their arms are provided with respective connecting rods which link them with the bases of said bellows -non-suspended mass of the primary springs-, thus constituting the four support points of the wagon box on the hyperstatic suspension systems.

According to Figures 11 and 12, the distributor consists of comprising the axle (69) and its supports (70), fixed to the frame, wherein the chambers or hollow and air-tight parts (71, 72, 72, 74) of the distributor similar to the known rolling lobe air chamber-type springs, are arranged in tandem, linked by respective central sliding frustoconical bases (75) solidly joined in opposition and respective intermediate sliding covers (76, 77), made air-tight by respective and necessary retainers, and also provided with respective straight connectors inserted in the side surfaces of said hollow parts, close to the intermediate sliding covers (76, 77), for the connection of their internal volumes, as can be observed in Figure 11, with the volumes of the pneumatic springs (61, 62, 63, 64) by means of the respective conduits (78, 79, 80, 81 ).

### Functioning

The train wagon is traveling on sleepers. When the wheels of the bogie (59), or topographical sensor, corresponding to the spring (62) impact the sleepers, they exert a double percussion on the energized fluid mass adjacent to the base of said spring, generating therein a subsequent and sudden double expansive wave pulse which is quickly propagated as such through the long column of fluid housed in the conduit (79) connected to the chamber (72) of the distributor until reaching the interfaces with the central bases (75) in opposition and the cover (76), both sliding on the axle (69), which distribute the energetic longitudinal double wave pulse packet to the remaining chambers (71, 72, 74), respectively, connected with the springs (61, 63, 64) by means of the conduits (78, 80, 81), producing in all of them, according to known rules of the art, slight decreases of the bearing capacity proportional in their instant fluid masses, as a result of which in practice, the four hyperstatic support points simultaneously move downwards at a similar magnitude, causing in the suspended mass a practically vertical translation movement, the acceleration of which is lower than one-fourth that of those recorded in the original pneumatic suspension of the train wagon, i.e. prior to the installation of the distributor. When the rail recovers its preceding level, the acceleration will be similar and of an opposite direction, whereas the total fluid mass of the system evolves according to the forms disclosed in the preceding examples.

Now, the wagon is traveling on a constant level when it enters a curve at cruising speed. The centrifugal inertial reaction of the suspended mass upon changing direction acts when the rims of the wheels enter into contact with the outer rail of the curve and increases according to a logarithmic spiral previous to the constant radius thereof, causing a slow increase of the transverse rotation of the suspended mass, whereas it progressively compresses the volumes of the pneumatic springs (61, 63), with increases of the energized effective surfaces, bearing capacities and probable inlet of air through the level valves (65, 67), whereas it expels fluid mass by means of the conduits (78, 80) to their respective chambers (71, 74) of the distributor, which moderately increase their respective volumes and lengths, their known factors (energized effective surfaces and subsequent thrust) decreasing, subsequently driving the intermediate covers (76, 77) to a succession of conditions of dynamic equilibrium, given that due to said expansion, on the opposite sides, the fluids housed in the chambers (72, 73) of the distributor react, increasing their energized effective surfaces and subsequent balancing resistance, with a simultaneous reduction of their respective lengths and volumes, whereby the evacuation of a certain part of their contained fluid mass is remarkably restricted by means of the conduits (79, 81) connected with their corresponding springs (62, 64), which moderately expand their lengths, decreasing their energized effective surfaces and their bearing capacities, whereas the level valves (66, 68) enter into a possible venting, thus tending to dynamically balance the increase of the centrifugal inertial turning torque of the suspended mass when the logarithmic spiral rolls with an increase of its curvature, which will be maintained constant in the maximum value during the entire next curved trajectory, as well as when the wagon exits the curve by means of another reverse transition condition with regard to the preceding one, here omitting its repetition.

During the trajectory traversed, the wagon box has been maintained at a highly stable running, with a moderate inclination, given that due to the centrifugal inertial torque of the suspended mass, the disclosed transverse turning torques corresponding to the springs (61, 63) and (62, 64), situated on both sides of the bogies (59, 60), - coupled-in tandem with respective chambers (72, 73) and (71, 74) of the distributor, react according to that observed and consistent with known rules of the art, generating a certain differential pressure between the compressed and expanding springs that is proportional to the magnitude of the acting centrifugal inertial torque, which reinforces said reactive torques of the springs of the suspension characterizing the dynamic wave pulse distributor as a novel pneumatic stabilizer of transverse turning torques with a gradual increase of the modulus of the acting torque. It is worth pointing out that the evolutions of the fluid have been carried out in all the elements of the distributor, with gradual volumetric transformations and, hence, with neither wave pulses nor trains of waves in the energized fluids of the system, i.e. according to the rules of the general law of gases. Another, greater advantage consists of carrying out the specific function disclosed exclusively in curved trajectories, exceeding the metal stabilizer bars because in straight stretches, when the automobile is traveling on arbitrary terrain topographies, said bars oppose the movements of the supports driven by the elastic ones, detracting from their efficiency with remarkable increases in maintenance costs in the known suspensions currently on the automotive market. Furthermore, the decrease of the impact coefficients of the metal wheels on rails and switch points will certainly be a cause for lower maintenance costs on high traffic density railways.

### Example 6

One of two large size vehicles are provided with the distributor disclosed in Example 3, and the other one is provided with conventional pneumatic suspension, facing one another at a highway intersection at cruising speed.

In the dynamic encounter of the masses of air between the double-decker bus, it can be seen that the known tail pull on the vehicle provided with the distributor is almost negligible, given that the momentum or thrust torque is solved, according to that observed, by means of the interference process of waves or wave pulses explained in Examples 1, 2 and 3, whereas in the bus with conventional suspension, they react by means of the transverse torques generated by the elastic features of its pneumatic springs, hydraulic shock absorbers and by the front and rear stabilizing bars, which require greater angular deformation for producing the necessary balancing torque generated by the encounter, which implies certain disturbance in its trajectory.

Furthermore, the importance of the wave pulse distributor increases with side wind and a wet ground given the lower frequency of the suspended and non-suspended masses, remarkably improving adherence of the tires to the ground, improving said encounters between heavy vehicles in emergency braking, on wet pavements, during a tire blow-out, because it adds remarkable-stability and adherence in the trajectory of the vehicle, according to that observed.

### Example 7

In the bus of Example 6 controlled by the wave pulse distributor, arrange the corresponding tires of each one of the support points as hollow and air-tight parts or secondary chambers of the distributor, coupling to that end, by means of known conduits, their corresponding fluid masses to the respective fluid masses belonging to the wave pulse distributor disclosed in Example 3.

### Prior Art

For optimal functioning and performance of the tires, whether in reference to the adherence of terrain or to their durability, specific pressures recommended by the manufacturers are required for each magnitude of the bearing load for the purpose of obtaining that the treads maintain full contact with the terrain, that there are less forces per surface unit the road, and for satisfactory responses in any situation or emergency.

Bearing in mind that the development of pneumatic springs and their preferred application in suspensions of heavy transports was carried out by a manufacturer of tires for vehicles with similar criteria and materials, it is viable to establish maximum working pressures in springs and tires for the admissible maximum loads in vehicles on the market.

The present patent application proposes coupling, by means of suitable connection conduits, the fluid masses of the tires, such as secondary hollow and air-tight parts, to the fluid masses of the distributor at their respective support points, to that end, a) inflating the air springs, b) their corresponding tires, c) said hollow and air-tight parts belonging to the distributor with the respective constant level valves installed in the corresponding and respective support points which will be detailed in the present example.

Today, tires are generally inflated, according to the recommendations of the manufacturers, with the pressure necessary for the maximum load, which worsens the quality of the suspension and the quality of the automobile when traveling with a load lower than said maximum load for all vehicles of the automotive fleet in operation. Since the necessary sealing of the tires is greater than the usual sealing of the suspension systems, it will be recommendable to insert known and necessary pressurestats in the connection conduits comprised between the tires and the conduits belonging to the distributor, to maintain at least a minimum working pressure compatible with the requirement of the tires during a prolonged parked condition of the vehicle, if necessary, and also during running, the suspension system becomes independent of the potential imperfections of the tires, such as punctures, deep cuts, blow-outs, etc.

### Installation of the Coupling between Fluid Masses of the Tires and of the Distributor

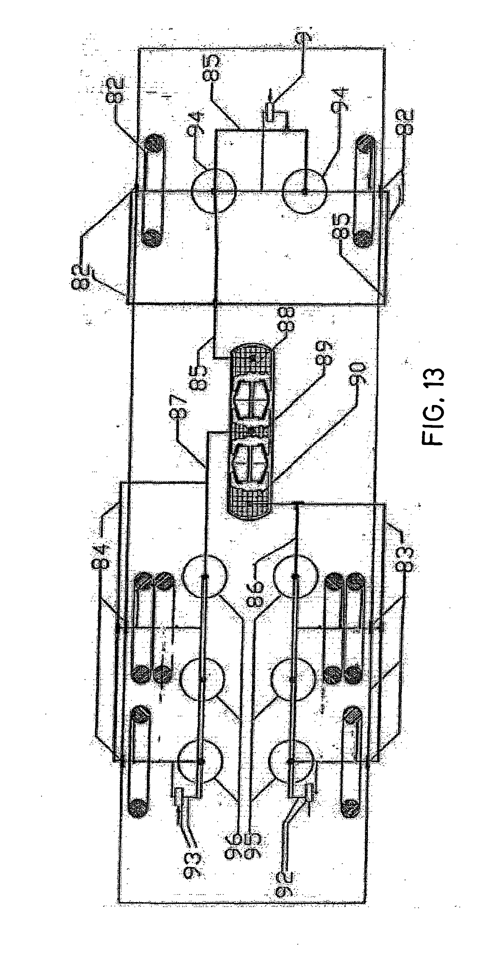

According to Figure 13, to carry out the installation, necessary and known rotation/translation joints similar to those used in the automatic tire inflators are installed in the centers of the rims of the tires belonging to each one of the three support points, which joints, by means of respective conduits in rotation, connect the peaks of the tires to the hollow shafts of the known rotation/translation joints (82, right and left, 83, 84), the ends of which support certain parts and respective outlet conduits (82, right and left, 83, 84) in translation, optionally provided with said pressurestats, the opposite ends of which are connected with the distribution conduits (85, 86, 87) which in turn are respectively connected: a) with the hollow and air-tight parts (88, 89, 90) of the distributor, b) with the constant level valves and their respective front outlet conduits (91) and rear outlet conduits (92, 93), c) with respective vertical bypasses of said conduits (85, 86, 87), to connect to the respective springs of the suspension (left and right front pair 94, rear pair 95, 96), by means of which the bus is prepared for running, as per that disclosed in claim 7.

### Loading of the Pneumatic System

The compressor is actuated when the motor is started -neither compressor nor motor being shown in the figures-, which compressor pressurizes the constant level valves and their front outlet conduits (91) and rear outlet conduits (92, 93) connected to the conduits (85, 86, 87) in order to meter the fluid masses housed in: a) the hollow and air-tight parts (88, 89, 90) of the distributor, b) the secondary or pneumatic hollow and air-tight parts (82 front, right and left, 83, 84 drive and support shaft) of the distributor, and c) the pneumatic springs of the suspension (left and right front pair 94, rear pair 95, 96), according to the process explained in Example 3, and according to the necessary pressure required by the magnitude of the tare, i.e. with no bus load, situated at its predetermined constant level.

### Functioning during Running

The bus without a load is traveling at 100 km/h, and the left front wheel (82) enters a dip of A cm.

Bearing in mind that when the front sensor or left wheel moves downwards A cm, the impact of the tire generates therein a certain wave pulse which is propagated through said rotating joint and the conduit (82) in translation, to then continue through the conduit (85) to the chamber (88) of the distributor and to its remaining chambers (89, 90), suspension springs (94 right, 95, 96, drive and support shaft), and preferably to the contact patches of the remaining supports or wheels (82 right, 83, 84), which decreases the rebound of the wheel and the subsequent frequencies thereof, while the spring (94) works in a sudden expansion with a much greater total working fluid mass with regard to the previous examples, and a subsequent slight loss in its bearing load, which grants the suspended mass an insignificant, practically vertical, downward movement with minimum acceleration of close to a few hundredths G, unknown on the market to date, given that prior to the installation of the distributor in the original bus, said acceleration is approximately 0.35 G.

Now, when the wheel recovers the previous level of the terrain, that set forth in the explanation of the downward movement, with the exception of the last section, is repeated in a reverse order and with an opposite sign, with less length of the spring, wherein the singular geometry of the elastic feature thereof experiences a necessary increase in said feature to moderately elevate the suspended mass, tending to avoid a probable obstacle. In relation to the remaining functions of the distributor already disclosed in the previous examples, these are maintained and amplified in the present example according to the superlative elastic features typical of it, i.e. maintaining the excellent support of the suspended mass in the dip of A cm.

It is worth mentioning the subsequent reduced frequency of the suspended and non-suspended masses of the automobile, as well as the absence of the transfer of weight from the rear wheel gear to the front wheel gear during the braking which, combined with the improvement of the wave synchronism among the non-suspended masses and their adherent weights in a ratio that is similar to the static weights, grant the automobile optimal braking conditions close to the theoretical values with completely stable trajectories in the most demanding road conditions, velocity conditions, in negative, positive or transverse accelerations, in winds, etc., which are extensive to any load condition of the automobile.

### Conclusions

The wave pulse distributor for controlling new or known pneumatic, pneumatic/metal, oleopneumatic, etc., suspension devices provides a superlative availability of damping and elastic potential energy to each and every one of the components of the system by means of its coupling to the known predetermined elastic constants of the springs and shock absorbers, thus conforming new and renovated suspension devices available-on the market, preferably suitable for all land vehicles, railway vehicles, landing gear, mechanic or civil stationary mass foundations.

In fact, the irregularities of the terrain or inertial reactions severely affecting in multiple directions the stability of the suspended mass of an automobile supported by known fluid springs and shock absorbers of predetermined elastic and damping features connected to the wave pulse distributor, are transformed, according to that set forth in the embodiment examples, into slight upward or downward translation movements close to the vertical direction, with accelerations having moduli which are reduced to a remarkable 5/20% of the accelerations recorded by said suspension devices prior to the coupling. When the fluid masses of the tires are coupled to the distributor, the already mentioned results are improved, without this implying significant costs in practice.

With regard to the turning torques or moments acting on the automobile due to changes of direction or of speed, either gradual or abrupt, the examples prove that the distributor produces a stable running given that the rotation or turning of the suspended mass suitably decreases when said changes intensify the accelerations. In fact, in emergency braking, the suspended mass maintains in practice a trajectory free of the transfer of weight from the rear axle to the front axle. Therefore, during deceleration, the adherent weights are maintained similar to the respective static weights, whether on smooth surfaces or on surfaces with an arbitrary topography, and synchronous to one another and with lower frequencies on the non-suspended and suspended masses, which produces a stable trajectory with shorter braking distances in normal or emergency maneuvers, even on wet ground, hail-covered ground, etc., given that the tires, with adherent weights proportional to the static weights, increase their contact times with the ground with regard to conventional suspensions. In practice, the wear of tires is similar between front and rear wheels, decreasing skidding and the risks in emergency maneuvers.

With regard to the maintenance of the vehicles, the reduction of the vertical accelerations and of the rotations due to level defects in the terrain reduces the subsequent frequencies borne by their mechanical components, causing increases in the durability of all its assemblies, and particularly in the suspension and steering elements, in axle head bushings and bolts, ball bearings, vibrations in the body, greatly increasing the useful life of the shock absorbers, etc., in overall terms, it implies a significant reduction of costs per kilometer in the use of vehicles with energized fluid suspensions coupled to the wave pulse distributor.

Furthermore, when the vehicles are traveling, less deterioration is caused on the roads because the invention remarkably reduces the impact coefficient on bridges and pavements, it prevents the transfers of weight in decelerations, decreasing excessive wear on front tires and pavements, as can be observed in the stops of urban transport vehicles, while at the same time it remarkably decreases the braking distances with regard to the legislative provisions of transit and those in force on the automotive market, increasing the safety thereof, especially in semi-trailers and trailers, and other heavy vehicles.

The preferred fields of application of the wave pulse distributor are in pneumatic suspensions in heavy transport vehicles and oleopneumatic suspensions, or oleopneumatic suspensions combined with metal springs in private vehicles, landing gears, or in mechanical or civil stationary masses, such as special foundations, etc.

With regard to the so-called smart or electronic pneumatic suspensions, oleopneumatic suspensions, or oleopneumatic suspensions combined with metal springs, they all maintain the known current spring/shock absorber design controlled by means of a set of known sensors detecting and transmitting the physical variables of the kinetics of the automobile to an electronic distributor intended for controlling in real time said predetermined individual constants in a new spring/shock absorber combination called smart metal, pneumatic, oleopneumatic or mixed systems preferably used in the new suspension systems currently available on the market of high-priced automobiles and passenger transport, etc.

From the economic-industrial point of view, it is worth pointing out that the wave pulse distributor coupled to a known mobile or stationary suspension device arranges, as complementary elements of the distributor, the following parts of said device: a) the lower ends of its non-suspended masses or wheels of each one of the suspension system supports as sensors of the kinetics generated due to the topographical differences of the terrain and of its external forces; b) the upper and lower ends, i.e. covers and bases, of the springs of the suspension and their interfaces with the adjacent fluids as converters of said topographical differences of the terrain and of its external forces and of the subsequent kinetic alterations of the suspended mass; c) as a processor and distributor of the changes of energy occurring in said supports of the system, and inertial changes of the suspended mass, to the remaining fluids housed in the springs of the suspension system, in the hollow and air-tight parts belonging to the distributor, and in the connections used between said springs and said hollow and air-tight parts belonging to the distributor, as detailed in claim 1, items a), b) and c), and provided to the fluids housed in the tires, used as hollow parts integrating the wave pulse distributor, there are elements which are detailed in items 1 b) and c) of claim 1, generically called hollow parts, the costs of which are insignificant, as a result of which it is possible to assume a favorable sale price and subsequent market response due to service, durability and quality of the product.

Bearing in mind the attempts made in 1950 with pneumatic suspensions and with the so-called oleopneumatic suspensions shortly after, scarcely used up to date, and the development carried out by an important manufacturer of the market on pneumatic MacPearson-type springs, the distributor protected by the present application provides a solution of maximum level and confidence for generally supporting all classes of vehicles and stationary masses with insignificant costs with regard to the costs and prices of the so-called smart suspensions.

Assuming that the performances of the electronic suspensions and those coupled to the wave pulse generator are similar, it is worth pointing out that the components of the distributor are constituted of the known energized fluid springs and conduits currently used, the durability of which stands out today, and is remarkably reinforced as it decreases the impact coefficient, this being gratuitously available by means of its simple use.

With regard to the electronic components of springs and shock absorbers of smart suspensions constituted of numerous electric, electronic and mechanical components, it is evident that the manufacturing, operation and maintenance costs of the suspension systems coupled to the wave pulse distributor are certainly lower than the so-called smart suspensions available on the market today.

The foundations of the operations carried out by the novel device are based on the compressibility of the fluids -compressed gases and liquids- governed by their own physical and fundamentally elastic properties, which are foolproof within the operation ranges, use temperature and normal functioning of the proposed system.

In conclusion, given the simplicity of the design of the oleopneumatic wave pulse distributor, the presumed reduced final cost, velocity in the transmission of the wave pulses and volume of the equipment applied to known or novel oleopneumatic suspensions, the oleopneumatic wave pulse distributor will comply with the most varied applications in land and air equipment, in stationary masses or in civil construction works due to its quality of service and unlimited versatility in load capacities.

Having described and defined the nature and scope of the present invention and the manner of carrying it out in practice, that claimed as invention and exclusive property is stated in the following claims.

## Claims

1. A wave pulse distributor for controlling pressurized fluid suspension systems, **characterized by** arranging the lower ends of the plurality of kinematic chains of plates not elastically supported by the primary suspension system, as sensors of the distributor and, the respective opposite ends of said plurality of kinematic chains of plates, the bases and covers of the springs of the primary suspension system are arranged as the plurality of drive elements of certain gradual or sudden positive or negative volumetric variations on the fluid masses housed in said springs, with known wave pulse generators, which are arranged as propagation routes to the pressurized fluid masses housed: a) in the internal volumes of said pressurized fluid-springs, b) in one or more of the necessary hollow and air-tight parts belonging to the wave pulse distributor, c) in the respective and necessary connection means comprised between said springs and said necessary hollow and air-tight parts belonging to the distributor.

2. A device according to claim 1, **characterized in that** said pressurized fluids comprise at least one compressible fluid.

3. A device according to claim 1, **characterized in that** the necessary hollow and air-tight parts belonging to the distributor are at least one conduit of certain and determined diameter, the ends of which are connected with the pneumatic springs of a suspension device with two support points.

4. A device according to claims 1 and 2, **characterized in that** the necessary hollow and air-tight parts belonging to the distributor are at least one conduit closed by the sealed joint of its ends of certain and determined diameter with respective bypasses connected to the respective pressurized fluid springs of the suspension device.

5. A device according to claims 1, 2, 3 and 4, **characterized in that** said conduits of certain and determined diameter are also provided with at least one bypass conduit provided with a valve closure means.

6. A device according to claim 1, **characterized in that** the necessary hollow and air-tight parts, components of the distributor for a known pneumatic suspension device at a constant level under variable load, with two or more support points, comprises at least two respective hollow and air-tight parts or chambers of the distributor, similar to the known pneumatic springs of said suspension devices, which are coupled in a kinematic chain of plates or of chambers, which parts situated on the ends support their respective centers on respective joint means fixed to the ends of the axle and which link them together, whereas on one hand their intermediate parts are provided with at least one movable, sliding and sealed central support on said axle, and on the other hand, said chambers are provided with necessary connection means between their internal volumes and their external media for coupling or connecting their fluid masses by means of necessary conduits to at least the fluid masses housed in the springs belonging to their respective support points.

7. A device according to claim 1, **characterized in that** the necessary hollow and air-tight parts of the distributor for a new oleopneumatic suspension device with two or more support points and constant level under variable load is **characterized by** comprising two or more hollow and air-tight parts, or oleopneumatic chambers, similar to the oleopneumatic springs of the suspension, and to which respective additional tubular bodies are hermetically coupled, which bodies are similar to the tubular bodies of said springs, with respective housings for respective retainers surrounding the inlets of the corresponding outer parts of the rods of said hollow and air-tight parts, the lengths of which must necessarily be distributed during the assembly of the device by halves inside of each one of the said respective tubular bodies, and to which respective threaded double joints are coupled in their remaining openings, which joints belong to a necessary and air-tight collector conduit of the distributor, which is provided with a valve closure means.

8. A device according to claim 1, **characterized in that** in a certain pneumatic device with three support points and constant level under variable load, controlled by a wave pulse distributor, the tires of the automobile belonging to its respective support points are arranged as secondary hollow and air-tight parts belonging to the distributor, since their fluid masses, by means of suitable and known rotation/translation joints: a) connect the peaks of the tires to the hollow shafts of said rotation/translation joints situated on the centers rims by means of respective conduits in rotation, b) the next conduits in translation assembled on the ends of the shafts in rotation are connected: 1) with the fluid masses housed in their respective springs of the suspension, 2) with the necessary hollow and air-tight parts belonging to the distributor, and 3) with the necessary connection means.

9. A device according to claims 1 and 8, **characterized in that** said secondary hollow and air-tight parts of the distributor or tires are arranged for their coupling in a secondary indirect distributor, constituted of a non-elastic tubular casing of certain and determined length, housing on the interior thereof the closed ends of two conduits of flexible and non-elastic walls, the opposite ends of which are connected with: a) the fluid masses of said secondary hollow and air-tight parts of the distributor, and b) the fluid masses housed in: 1) their respective springs of the suspension, 2) the necessary hollow and air-tight parts belonging to the distributor, and 3) the necessary connection means mentioned in point c) of claim 1.
